# EUROPEAN PATENT SPECIFICATION

(11) **EP 3 259 536 B1**
(45) Date of publication and mention of the grant of the patent: **01.04.2020**
(21) Application number: 16752730.8
(22) Date of filing: 01.02.2016
(51) Int. Cl.: F24F 12/00, F24F 7/08, F24F 13/30, F28D 9/00, F28D 21/00

(54) **HEAT RECOVERY DEVICE AND METHOD FOR THE USE OF DISPOSABLE HEIGHT OF THE DEVICE IN AN AIR HANDLING UNIT**
WÄRMERÜCKGEWINNUNGSVORRICHTUNG UND VERFAHREN ZUR VERWENDUNG DER VERFÜGBAREN HÖHE DER VORRICHTUNG IN EINER LUFTBEHANDLUNGSEINHEIT
DISPOSITIF DE RÉCUPÉRATION DE CHALEUR ET PROCÉDÉ POUR L'UTILISATION D'UNE HAUTEUR DISPONIBLE DU DISPOSITIF DANS UNE UNITÉ DE TRAITEMENT DE L'AIR

(30) Priority: 20.02.2015 SE 1550193
(43) Date of publication of application: 27.12.2017
(73) Proprietor: FläktGroup Sweden AB, 551 84 Jönköping (SE)
(72) Inventor: AXELSSON, Claes-Göran, 55338 Jönköping (SE)
(74) Representative: Curo AS
(86) International application number: PCT/SE2016/050067
(87) International publication number: WO 2016/133444

(56) References cited:
- EP-A1- 2 275 751
- WO-A2-2008/054199
- WO-A2-2008/054199
- CZ-A3- 9 102 338
- FR-A1- 2 893 393
- JP-A- S5 461 350
- JP-A- S6 273 028
- JP-A- H04 281 138
- JP-A- H11 118 222
- JP-A- 2004 309 072
- KR-B1- 101 270 510
- US-A- 3 513 907
- US-A1- 2015 021 001

## Description

### Technical field

Present invention relates to a heat recovery device and a method for maximum use of the disposable height for heat recovery, with so-called counter-flow heat exchanger, in an air handling unit.

### Background of the invention

Within the field of air handling a number of different types of heat recovery devices are present, where different types are suitable for different purposes. So-called counter-flow heat exchangers are used preferably when a high heat recovery efficiency is wanted, but where a leakage between supply and exhaust airflow is not allowed or to be avoided, mostly because of the risk of odor transfer. A counter-flow heat exchanger is different from a pure cross-flow heat exchanger by having a certain longitudinal extent, wherein the respective separated channels of the two heat exchanging flows extending parallel, and in which the air flows in every other channel has the opposite direction. A common use is for example in residential ventilation, where heat is recovered from exhaust air and transferred via heat exchanging according to the counter-flow principle, without the risk of odor transfer. The manufacture process of heat exchangers is today highly standardized where manufacturers provide a range of standard sizes, which fit together with the respective size of the air handling units. While the air handling units with components also are standardized and dimensionally adapted to other types of heat exchangers or other dimensioning elements, will not always the counter-flow heat exchanger, so to speak, fit optimally with standard sizes of air handling unit, whereby, for example, the air handling cross section, primarily relating to height is not exploited to the maximum for the heat recovery. In order to increase the overall heat recovery efficiency, it is desirable that the total heat exchanging surface is increased.

A first example of prior art is EP2275751 A1, which discloses a heat exchange ventilator that includes a supply air duct that takes in outdoor air and blows it out indoors, an exhaust air duct that takes in indoor air and blows it out outdoors, and a plurality of heat exchange elements that exchanges heat between outdoor air flowing down through the supply air duct and indoor air flowing down through the exhaust air duct, the heat exchange elements being arranged in series from an outdoor side to an indoor side, wherein a sensible heat exchange efficiency of a heat exchange element arranged on a most outdoor side is higher than a sensible heat exchange efficiency of a heat exchange element arranged on an indoor side adjacent to the heat exchange element arranged on the most outdoor side.

A second example of prior art is WO 2008/054199 A2, which discloses a system for coupling two adjacently placed heat exchangers, which is provided with a first coupling unit connected to the heat exchangers on a first side thereof, and a second coupling unit connected to the heat exchangers on a second side thereof. In each coupling unit an inlet duct is formed for one of the heat exchangers connected thereto and an outlet duct is formed for the other heat exchanger connected thereto. The inlet and outlet ducts can here intersect in each coupling unit. The coupling units can be identical and be arranged in the coupling system oriented in opposite directions. The coupling system can be further provided with a bypass duct extending from the first to the second side and running along the heat exchangers, which duct can run through the first and second coupling unit and between the heat exchangers connected thereby. The invention also relates to a coupling unit for application in a coupling system as described above.

### Disclosure of the invention

With the present invention the object is achieved to solve the above present problem according to a first aspect of the invention by a heat recovery device according to the claim 1. By the heat recovery device, which is arranged into an air handling unit, and which comprise at least one first and one second counter-flow heat exchanger, energy is recovered from a first air stream and is delivered to a second air stream. In order to adopt the possible area for heat recovery, at least one second counter-flow heat exchanger is positioned on top of the first counter-flow heat exchanger, and by that their respective height dimensions are different, i.e. the heat exchangers have different size, the flexibility and the possibility to fill the complete air handling interior height with counter-flow heat exchangers increases. By this design most of the air handling sizes can be covered by a combination of double, or multiple counter-flow heat exchangers arranged on top of each other. To guide the air flows through the both counter-flow heat exchangers at least two air distributors are arranged on respective side of the counter-flow heat exchangers in the airflow direction for supply respective exhaust air and outdoor respective extract air. The air distributors are dimensionally coordinated with the inlets and outlets of respective counter-flow heat exchanger, whereby all through air by respective counter-flow heat exchanger passes through the air distributors and so that the two heat-exchanging air streams do not mix. The air distributors look somewhat like rectangular cross-flow heat exchangers. For example if the first counter-flow heat exchanger is of a greater size and a smaller second counter-flow heat exchanger is positioned above the first, the respective side of the air distributor that abuts the inlet/outlet of the first bigger counter-flow heat exchanger, gets longer compared to the side that abuts the second, smaller counter-flow heat exchanger. Seen from the side the air distributors have the shape of a rectangle, with the long side abutting the first counter-flow heat exchanger and the short side abutting the second counter-flow heat exchanger. By the air distributors the air streams from respective counter-flow heat exchanger are guided to pass each other from outdoor air side to supply air side and from exhaust air side to extract air side. By this a high flexibility is achieved with great possibilities to, in the best way, combine different sizes of counter-flow heat exchangers, to fit the interior height at the most modulated sizes of the air handling unit or air handling unit modules, which have not been possible earlier.

According to a preferred embodiment the total height of the respective counter-flow heat exchanger height is almost similar with the interior height of the air handling unit, whereby principally the complete height is "covered" with counter-flow heat exchangers, at least as far as technically possible. By this is the non-active interior height of the air handling unit minimized, which normally, at prior art solutions is filled with cover plates or the like, in order to fill or air tighten the air handling unit height above respective below the counter-flow heat exchanger.

According to another preferred embodiment a third counter-flow heat exchanger is arranged above the second counter-flow heat exchanger. The third counter-flow heat exchanger has a height similar with at least one of the other two counter-flow heat exchangers, which is positive for the modularity. By this an even higher grade of possibility to adapt the number of counter-flow heat exchangers to the height of the air handling unit is achieved. In the same was as described above must another air distributor be arranged to control the air flows in a correct way.

According to an alternative embodiment compared to the just above described embodiment is a third counter-flow heat exchanger arranged above the second counter-flow heat exchanger, but this has a height that differs from at least one of the other two counter-flow heat exchangers. In this way all included counter-flow heat exchangers can have different height.

According to a preferred embodiment of the heat recovery device, the on top of each other arranged counter-flow heat exchangers and the thereto attached air distributors constitutes one complete heat exchanger unit, designed for highest air tightness and for a simple assembly in the air handling unit. At the side of this unit preferably a so-called "bypass"-damper is arranged for use at defrosting or operation at summer mode. Also solutions with so-called sectional defrost can be arranged in connection to the counter-flow heat exchangers alternatively at the heat exchanger unit. The width of the heat exchanger unit is adapted to the air handling unit and possible "bypass"-devices.

According to another preferred embodiment, one or more second heat exchanger units can be arranged beside the first unit, for better modularity. These are configured in the same way as the first heat exchanger unit concerning the number of counter-flow heat exchangers, their heights and their air distributors. Thereby, both the available height and width of the air handling unit can be used in the best possible way unlike previous known solutions.

From a second aspect of the invention the object is achieved to solve the above mentioned problems by a method at a heat recovery device according to claim 6. At the heat recovery device is at least two counter-flow heat exchangers arranged into an air handling unit to exchange energy between a first air stream and a second air stream, and at least one of the counter-flow heat exchangers is arranged above the other counter-flow heat exchanger, i.e. it is placed on top of the other. The height of respective counter-flow heat exchanger differs from each other why the method allows that a high flexibility and a better adaption of the total height of the two counter-flow heat exchangers in relation to the available interior height of the air handling unit is achieved. By the method it is easy to adapt the modularity of the counter-flow heat exchangers with the modularity of the air handling units of different modular size. Further, in connection to the inlet and outlet of said counter-flow heat exchanger are at least two air distributors arranged, which are dimensionally coordinated with inlet and outlet of the counter-flow heat exchanger so that all through-passing air passes through the air distributors and is distributed and led to respectively from the counter-flow heat exchangers in such way that the two air streams (supply/exhaust) don't get mixed when the air streams passing through the air handling unit and the heat exchangers.

According to a preferred embodiment of the method the counter-flow heat exchangers and the air-distributors are arranged to one complete heat exchanger unit, to achieve highest air tightness between the air streams and for a simple assembly in the air handling unit. At the side of this unit preferably one or more so-called "bypass"-dampers are arranged for use at defrosting or operation at summer mode. Also solutions with so-called sectional defrost can be arranged in connection to the counter-flow heat exchangers alternatively at the heat exchanger unit. The width of the heat exchanger unit is adapted to the air handling unit and possible "bypass"-devices. The method makes it virtually as easy to mount several counter-flow heat exchangers compared to the assembly of a single counter-flow heat exchanger but with the entire heat exchanger unit is adaptable to the modular dimensions of the air handling units.

According to another preferred embodiment of the method, one or more second heat exchanger units are arranged beside the first unit, for better modularity. These are configured in the same way as the first heat exchanger unit concerning the number of counter-flow heat exchangers, their heights and their air distributors. Thereby, both the available height and width of the air handling unit can be used in the best possible way unlike previous known solutions. The respective heat exchanger unit is inserted, so to speak beside each other in the width direction of the air handling unit, and is chosen from the aspect of filling a suitable width of the cross section of the air handling unit, whereby the height as well as the width is maximally used for heat recovery.

### Short description of the figures

The following schematic figures shows:
- Fig. 1 shows a schematic picture of a heat recovery device at an air handling unit comprising two counter-flow heat exchangers of different size, arranged on top of each other, according the invention.
- Fig 2. shows a section of the air handling unit with two heat exchanger units according to the invention arranged side-by-side in the cross section of the air handling unit.

The structural design of the present invention is apparent in the following detailed description of an embodiment of the invention with reference to the accompanying figures which show a preferred but not limiting embodiment of the invention.

### Detailed description of the figures

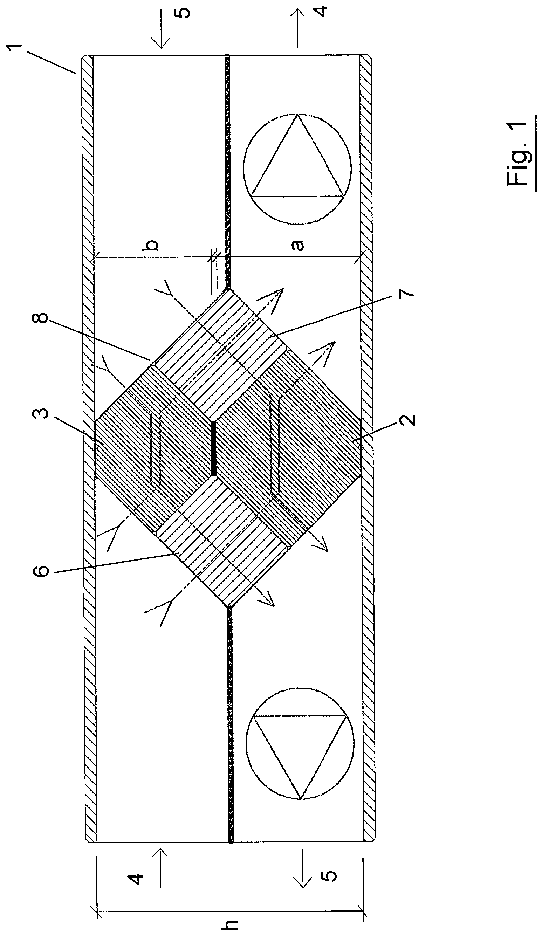

**Fig.1** is showing a principal picture of a heat recovery device at an air handling unit 1. The air handing unit 1 comprises, according to the preferred embodiment, a first counter-flow heat exchanger 2, in this case arranged in a lower part of the air handling unit 1, and a second counter-flow heat exchanger 3 arranged on top of or at least above the first counter-flow heat exchanger 2. The height b of the second counter-flow heat exchanger 3 differs from the height a of the first counter-flow heat exchanger 2, whereby different sizes of preferably dimensionally standardized counter-flow heat exchangers can be combined to better cover the complete interior height h of the air handling unit 1. Respective counter-flow heat exchanger 2, 3 is in itself conventionally built up in the form of a hexagon. The main air stream directions through the air handling unit 1 are in the figure from left to right and from right to left, and comprises a first air stream 4 and a second air stream 5, between which air streams 4, 5 energy is exchanged via the counter-flow heat exchangers 2, 3. The counter-flow part where the first and the second air stream 4, 5 meet, comprises of parallel, horizontal air channels, where every second air channel is through-flowed by the first air stream 4 in one direction, and every second air channel is through-flowed by the second air stream 5 in the opposite direction. To distribute and guide the air streams are two air distributors 6, 7 arranged on each side of the counter-flow heat exchangers 2, 3. The air distributors 6, 7 looks like rectangular cross-flow heat exchangers, comprising of crosswise arranged channels, which are arranged to distribute the air to the inlet of respective counter-flow heat exchangers 2, 3, and also guide the air from the outlet of respective counter-flow heat exchanger 2, 3 and further to the correct half (upper or lower) of the air handling unit 1. In order to, basically in the same easy way as for a simple counter-flow heat exchanger, be able to mount these dual counter-flow heat exchangers 2, 3 and the air distributors 6, 7, these are pre-assembled to one single unit - a first complete heat exchanger unit 8. When the module size of the air handling unit 1 is determined by other premises than the height of one, thereto mating, first counter-flow heat exchanger 2, the first heat exchanger unit 8 is adopted to the interior height h inside the air handling unit 1, by complementing the first counter-flow heat exchanger 2 with a suitable second counter-flow heat exchanger 3, for optimal height. To this is also chosen air distributors 6, 7, preferably also from a standard range, whereafter these four pieces are assembled to the first heat exchanging unit 8. This is then mounted into the air handling unit 1 as a complete unit. Other sealing around the heat exchanging unit 8 is made in a conventional way by seals between the heat exchanging unit 8 and interior planes/surfaces inside the air handling unit 1.

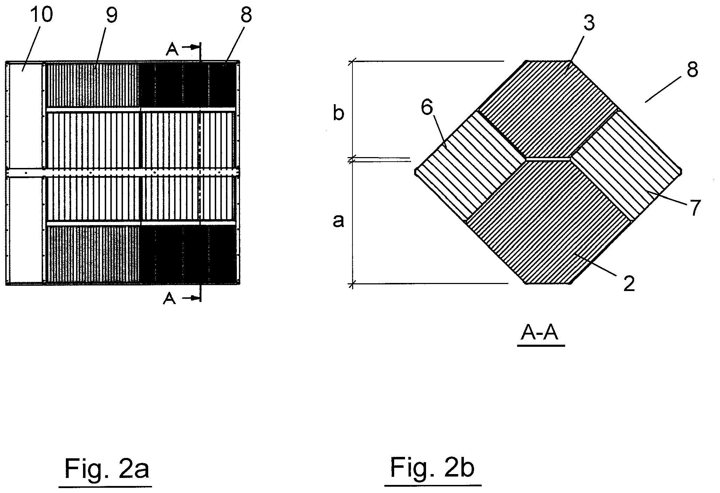

**Fig.2a** is showing a cross-section of a module 11 for mounting inside the air handling unit 1, where the first heat exchanging unit 8 and a second heat exchanging unit 9 is arranged next to each other in a framework. Additionally, visible in the figure next to the second heat exchanger unit 9, is a bypass 10, which is used for the bypass of air for cases where the heat recovery device must be defrosted or simply bypassed when no need of heat recovery. Preferably the framework consists of a number of sections dividing plates spaced from each other by spacer poles, at suitable distance for arranging the heat exchangers 8, 9 in between.

**Fig.2b** is showing a cross-section of the first heat exchanging unit 8, with the first counter-flow heat exchanger 2 at the bottom and the second counter-flow heat exchanger 3 on top of the first, and the both air distributors 6, 7 at their respective inlet/outlet depending of the air stream directions. The height b of the second counter-flow heat exchanger 3 differs from the height a of the first counter-flow heat exchanger 2.

### PARTS LIST

1 = air handling unit
2= first counter-flow heat exchanger
3= second counter-flow heat exchanger
4= first air stream
5= second air stream
6= air distributor
7= air distributor
8= first heat exchanging unit
9= second heat exchanging unit
10= bypass
11 = module

## Claims

1. Heat recovery device for an air handling unit (1), the heat recovery device comprising at least one first and one second counter-flow heat exchanger (2, 3) arranged to exchange energy between a first air stream (4) and a second air stream (5), and further in connection to an inlet and outlet of said counter-flow heat exchangers (2, 3) are at least two air distributors (6, 7) arranged, and which air distributors (6, 7) are dimensionally coordinated with the inlet and outlet of the counter-flow heat exchangers (2, 3), and which air distributors (6, 7) are arranged to distribute and guide the air to respective from the counter-flow heat exchangers (2, 3) to prevent mixing of the two air streams (4, 5), wherein the height dimension (b) of the second counter-flow heat exchanger (3) differs from the height dimension (a) of the first counter-flow heat exchanger (2), **characterized in that** at least the second counter-flow heat exchanger (3) is arranged on top of the first counter-flow heat exchanger (2), and the sum of the height dimensions (a, b) of all counter-flow heat exchangers (2, 3) arranged on top of each other is almost equal with the interior height dimension (h) of the air handling unit (1).

2. Heat recovery device according to claim 1, **characterized in that** a third counter-flow heat exchanger is arranged on top of the second counter-flow heat exchanger (3), and which third counter-flow heat exchanger has a height dimension equal to the height dimension (a, b) of one of the both other counter-flow heat exchangers (2, 3).

3. Heat recovery device according to claim 1, **characterized in that** a third counter-flow heat exchanger is arranged on top of the second counter-flow heat exchanger (3), and which third counter-flow heat exchanger has a height dimension different from the height dimension (a, b) of at least one of the both other counter-flow heat exchangers (2, 3).

4. Heat recovery device according to any of the preceding claims, **characterized in that** the on top of each other stacked counter-flow heat exchangers (2, 3) and the connecting air distributors (6, 7) constitutes one complete first heat exchanging unit (8), arranged to be assembled as one unit into the air handling unit (1).

5. Heat recovery device according to claim 4, **characterized in that** at least one complete second heat exchanging unit (9) is arranged to be assembled next to the first heat exchanging unit (8) by that the first heat exchanging unit (8) and the second heat exchanging unit (9) are arranged next to each other in a frame work, which comprises dividing plates arranged at a sufficient distance from each other for arranging the heat exchanging units (8, 9) therebetween, wherein the at least one second heat exchanging unit (9) is configured in the same way as the first heat exchanging unit (8) concerning the number of counter-flow heat exchangers (2, 3), its height dimensions (a, b) and its air distributors (6, 7).

6. Method for assembling a heat recovery device for an air handling unit (1), the heat recovery device comprising at least one first and one second counter-flow heat exchanger (2, 3) arranged to exchange energy between a first air stream (4) and a second air stream (5), and further in connection to an inlet and outlet of said counter-flow heat exchangers (2, 3) are two air distributors (6, 7) arranged, which air distributors (6, 7) are dimensionally coordinated with the inlet and outlet of the counter-flow heat exchangers (2, 3), and which air distributors (6, 7) distributes and guides the air to respective from the counter-flow heat exchangers (2, 3) to prevent mixing of the two air streams (4, 5), wherein the height dimension (b) of the second counter-flow heat exchanger (3) differs from the height dimension (a) of the first counter-flow heat exchanger (2), **characterized by**
arranging at least the second counter-flow heat exchanger (3) on top of the first counter-flow heat exchanger (2) such that the sum of the height dimensions (a, b) of all counter-flow heat exchangers (2, 3) arranged on top of each other is almost equal with the interior height dimension (h) of the air handling unit (1).

7. Method according to claim 6, **characterized by** joining the on top of each other stacked counter-flow heat exchangers (2, 3) and the connecting air distributors (6, 7) to one complete first heat exchanging unit (8), and assembling them as one unit into the air handling unit (1).

8. Method according to claim 7, **characterized by** assembling at least one complete second heat exchanging unit (9) next to the first heat exchanging unit (8) by arranging the first heat exchanging unit (8) and the second heat exchanging unit (9) next to each other in a frame work, which comprises dividing plates arranged at a sufficient distance from each other for arranging the heat exchanging units (8, 9) therebetween, and configuring the at least one second heat exchanging unit (9) in the same way as the first heat exchanging unit (8) concerning the number of counter-flow heat exchangers (2, 3), its height dimensions (a, b) and its air distributors (6, 7).

## Patentansprüche

1. Wärmewiedergewinnungsvorrichtung für eine Luftbehandlungseinheit (1), wobei die Wärmewiedergewinnungsvorrichtung wenigstens einen ersten und einen zweiten Gegenstrom-Wärmeaustauscher (2, 3) aufweist, die angeordnet sind, um Energie zwischen einem ersten Luftstrom (4) und einem zweiten Luftstrom (5) auszutauschen, und wobei in Verbindung mit einem Einlass und einem Auslass der Gegenstrom-Wärmeaustauscher (2, 3) wenigstens zwei Luftverteiler (6, 7) angeordnet sind, und wobei die Luftverteiler (6, 7) dimensionsmäßig mit dem Einlass und dem Auslass der Gegenstrom-Wärmeaustauscher (2, 3) abgestimmt sind, und wobei die Luftverteiler (6, 7) dazu angeordnet sind, die Luft von dem Gegenstrom-Wärmeaustauschern (2, 3) zu verteilen und zu leiten, um ein Mischen der beiden Luftströme (4, 5) zu vermeiden, wobei die Höhenausdehnung (b) des zweiten Gegenstrom-Wärmeaustauschers (3) von der Höhenausdehnung (a) des ersten Gegenstrom-Wärmeaustauschers (2) abweicht, **dadurch gekennzeichnet, dass** wenigstens der zweite Gegenstrom-Wärmeaustauscher (3) auf der Oberseite des ersten Gegenstrom-Wärmeaustauschers (2) angeordnet ist, und die Summe der Höhenausdehnungen (a, b) von beiden Gegenstrom-Wärmeaustauschern (2, 3), die aufeinander angeordnet sind, fast gleich der inneren Höhenausdehnung (h) der Luftbehandlungseinheit (1) ist.

2. Wärmewiedergewinnungsvorrichtung nach Anspruch 1, **dadurch gekennzeichnet, dass** ein dritter Gegenstrom-Wärmeaustauscher auf der Oberseite des zweiten Gegenstrom-Wärmeaustauschers (3) angeordnet ist, und wobei der dritte Gegenstrom-Wärmeaustauscher eine Höhenausdehnung hat, die gleich der Höhenausdehnung (a, b) von wenigstens einem der beiden anderen Gegenstrom-Wärmeaustauscher (2, 3) ist.

3. Wärmewiedergewinnungsvorrichtung nach Anspruch 1, **dadurch gekennzeichnet, dass** ein dritter Gegenstrom-Wärmeaustauscher auf der Oberseite des zweiten Gegenstrom-Wärmeaustauschers (3) angeordnet ist, und wobei der dritte Gegenstrom-Wärmeaustauscher eine Höhenausdehnung hat, die von der Höhenausdehnung (a, b) von wenigstens einem der beiden anderen Gegenstrom-Wärmeaustauschern (2, 3) abweicht.

4. Wärmewiedergewinnungsvorrichtung nach irgendeinem der vorhergehenden Ansprüche, **dadurch gekennzeichnet, dass** auf der Oberseite von jedem der anderen gestapelten Gegenstrom-Wärmeaustauscher (2, 3) und den verbindenden Luftverteilern (6, 7) wenigstens eine vollständige erste Wärmeaustauschereinheit (8) vorgesehen ist, die angeordnet ist, als eine Einheit in die Luftbehandlungseinheit (1) eingebaut zu werden.

5. Wärmewiedergewinnungsvorrichtung nach Anspruch 4, **dadurch gekennzeichnet, dass** wenigstens eine vollständige zweite Wärmeaustauschereinheit (9) angeordnet ist, um angrenzend zu der ersten Wärmeaustauschereinheit (8) eingebaut zu werden, wobei die erste Wärmeaustauschereinheit (8) und die zweite Wärmeaustauschereinheit (9) angrenzend in einem Gestell angeordnet sind, das Trennplatten aufweist, die in einem ausreichenden Abstand voneinander angeordnet sind, um die Wärmeaustauschereinheiten (8, 9) dazwischen anzuordnen, wobei die wenigstens eine zweite Wärmeaustauschereinheit (9) auf die gleiche Weise ausgebildet ist, wie die erste Wärmeaustauschereinheit (8) im Hinblick auf die Anzahl der Gegenstrom-Wärmeaustauscher (2, 3), auf ihre Höhenausdehnungen (a, b), und auf ihre Luftverteiler (6, 7).

6. Verfahren zum Montieren einer Wärmewiedergewinnungsvorrichtung für eine Luftbehandlungseinheit (1), wobei die Wärmewiedergewinnungsvorrichtung wenigstens einen ersten und einen zweiten Gegenstrom-Wärmeaustauscher (2, 3) aufweist, die angeordnet sind, um Energie zwischen einem ersten Luftstrom (4) und einem zweiten Luftstrom (5) auszutauschen, und wobei ferner in Verbindung mit einem Einlass und einem Auslass der Gegenstrom-Wärmeaustauscher (2, 3) zwei Luftverteiler (6, 7) angeordnet sind, wobei die Luftverteiler (6, 7) dimensionsmäßig auf den Einlass und den Auslass der Gegenstrom-Wärmeaustauscher (2, 3) abgestimmt sind, und wobei die Luftverteiler (6, 7) die Luft in Bezug auf die Gegenstrom-Wärmeaustauscher (2, 3) verteilen und leiten, um ein Mischen der beiden Luftströme (4, 5) zu vermeiden, wobei die Höhenausdehnung (b) des zweiten Gegenstrom-Wärmeaustauschers (3) von der Höhenausdehnung (a) des ersten Gegenstrom-Wärmeaustauschers (2) abweicht, **gekennzeichnet durch**
Anordnen von wenigstens dem zweiten Gegenstrom-Wärmeaustauscher (3) auf der Oberseite des ersten Gegenstrom-Wärmeaustauschers (2), derart, dass die Summe der Höhenausdehnungen (a, b) von allen Gegenstrom-Wärmeaustauschern (2, 3), die aufeinander angeordnet sind, fast gleich zu der inneren Höhenausdehnung (h) der Luftbehandlungseinheit (1) ist.

7. Verfahren nach Anspruch 6, **gekennzeichnet durch** ein Verbinden der aufeinander gestapelten Gegenstrom-Wärmeaustauscher (2, 3) und das Verbinden der Luftverteiler (6, 7) zu einer vollständigen ersten Wärmeaustauschereinheit (8), und das Zusammenbauen davon als eine Einheit in die Luftbehandlungseinheit (1).

8. Verfahren nach Anspruch 7, **gekennzeichnet durch** das Zusammenbauen von wenigstens einer vollständigen zweiten Wärmeaustauschereinheit (9) am nächsten zu der ersten Wärmeaustauschereinheit (8), indem die erste Wärmeaustauschereinheit (8) und die zweite Wärmeaustauschereinheit (9) am nächsten zueinander in einem Gestell angeordnet werden, das Trennplatten aufweist, die in einem ausreichenden Abstand voneinander angeordnet sind, um die Wärmeaustauschereinheiten (8, 9) dazwischen anzuordnen, und das Konfigurieren der wenigstens einen zweiten Wärmeaustauschereinheit (9) auf die gleiche Weise wie die erste Wärmeaustauschereinheit (8) im Hinblick auf die Anzahl von Gegenstrom-Wärmeaustauschern (2, 3), ihre Höhenausdehnungen (a, b) und im Hinblick auf ihre Luftverteiler (6, 7).

## Revendications

1. Dispositif de récupération de chaleur destiné à une unité de traitement de l'air (1), le dispositif de récupération de chaleur comprenant au moins un premier et un deuxième échangeur de chaleur (2, 3) qui travaillent à contre-courant, disposés pour échanger de l'énergie entre un premier courant d'air (4) et un deuxième courant d'air (5), et en outre au moins deux distributeurs d'air (6, 7) qui sont mis en liaison avec une entrée et une sortie desdits échangeurs de chaleur (2, 3) qui travaillent à contre-courant, et lesdits distributeurs d'air (6, 7) sont coordonnés du point de vue dimensionnel avec l'entrée et la sortie desdits échangeurs de chaleur (2, 3) qui travaillent à contre-courant et lesdits distributeurs d'air (6, 7) sont conçus pour distribuer et pour guider l'air en direction, respectivement à partir des échangeurs de chaleur (2, 3) qui travaillent à contre-courant dans le but d'empêcher le mélange des deux courants d'air (4, 5) ; dans lequel la dimension en hauteur (b) du deuxième échangeur de chaleur (3) qui travaillent à contre-courant diffère de la dimension en hauteur (a) du premier échangeur de chaleur (2) qui travaillent à contre-courant, **caractérisé en ce qu'**au moins le deuxième échangeur de chaleur (3) qui travaillent à contre-courant est disposé par-dessus le premier échangeur de chaleur (2) qui travaillent à contre-courant et la somme des dimensions en hauteur (a, b) de l'ensemble des échangeurs de chaleur (2, 3) qui travaillent à contre-courant disposés les uns par-dessus les autres est pratiquement égale à la dimension interne en hauteur (h) de l'unité de traitement de l'air (1).

2. Dispositif de récupération de chaleur selon la revendication 1, **caractérisé en ce qu'**un troisième échangeur de chaleur qui travaillent à contre-courant est disposé par-dessus le deuxième échangeur de chaleur (3) qui travaillent à contre-courant et ledit troisième échangeur de chaleur qui travaillent à contre-courant possède une dimension en hauteur égale à la dimension en hauteur (a, b) de l'un des deux autres échangeurs de chaleur (2, 3) qui travaillent à contre-courant.

3. Dispositif de récupération de chaleur selon la revendication 1, **caractérisé en ce qu'**un troisième échangeur de chaleur qui travaillent à contre-courant est disposé par-dessus le deuxième échangeur de chaleur (3) qui travaillent à contre-courant et ledit troisième échangeur de chaleur qui travaillent à contre-courant possède une dimension en hauteur différente de la dimension en hauteur (a, b) d'au moins un des deux autres échangeurs de chaleur (2, 3) qui travaillent à contre-courant.

4. Dispositif d'récupération de chaleur selon l'une quelconque des revendications précédentes, **caractérisé en ce que** les échangeurs de chaleur (2, 3) qui travaillent à contre-courant disposés les uns par-dessus les autres et les distributeurs d'air (6, 7) de mise en liaison constituent une première unité complète d'échange de chaleur (8) conçue pour être montée sous la forme d'une unité en une seule pièce dans l'unité de traitement de l'air (1).

5. Dispositif de récupération de chaleur selon la revendication 4, **caractérisé en ce qu'**au moins une deuxième unité d'échange de chaleur (9) est conçue pour être montée à côté de la première unité d'échange de chaleur (8) par le fait que la première unité d'échange de chaleur (8) et la deuxième unité d'échange de chaleur (9) sont disposées l'une à côté de l'autre dans une structure qui comprend des plaques de séparation placées à une distance l'une de l'autre qui est suffisante pour l'aménagement des unités d'échange de chaleur (8, 9) entre elles; dans lequel ladite au moins une deuxième unité d'échange de chaleur (9) est configurée de la même manière que la première unité d'échange de chaleur (8) en ce qui concerne le nombre des échangeurs de chaleur (2, 3) qui travaillent à contre-courant, ses dimensions en hauteur (a, b) et ses distributeurs d'air (6, 7).

6. Procédé pour le montage d'un dispositif de récupération de chaleur destiné à une unité de traitement de l'air (1), le dispositif de récupération de chaleur comprenant au moins un premier et un deuxième échangeur de chaleur (2, 3) qui travaillent à contre-courant, conçus pour échanger de l'énergie entre un premier courant d'air (4) et un deuxième courant d'air (5), et en outre deux distributeurs d'air (6, 7) qui sont mis en liaison avec une entrée et une sortie desdits échangeurs de chaleur (2, 3) qui travaillent à contre-courant, lesdits distributeurs d'air (6, 7) étant coordonnés du point de vue dimensionnel avec l'entrée et la sortie des échangeurs de chaleur (2, 3) qui travaillent à contre-courant, et lesdits distributeurs d'air (6, 7) distribuent et guident l'air en direction, respectivement à partir des échangeurs de chaleur (2, 3) qui travaillent à contre-courant dans le but d'empêcher le mélange des deux courants d'air (4, 5) ; dans lequel la dimension en hauteur (b) du deuxième échangeur de chaleur (3) qui travaillent à contre-courant diffère de la dimension en hauteur (a) du premier échangeur de chaleur (2) qui travaillent à contre-courant, **caractérisé par** le fait de disposer au moins le deuxième échangeur de chaleur (3) qui travaillent à contre-courant par-dessus le premier échangeur de chaleur (2) qui travaillent à contre-courant, d'une manière telle que la somme des dimensions en hauteur (a, b) de l'ensemble des échangeurs de chaleur (2, 3) qui travaillent à contre-courant disposés les uns par-dessus les autres est pratiquement égale à la dimension interne en hauteur (h) de l'unité de traitement de l'air (1).

7. Procédé selon la revendication 6, **caractérisé par** le fait de joindre les échangeurs de chaleur (2, 3) qui travaillent à contre-courant empilés les uns par-dessus les autres et les distributeurs d'air (6, 7) de mise en liaison afin d'obtenir une première unité complète d'échange de chaleur (8), et par le fait de les monter sous la forme d'une unité en une seule pièce dans l'unité de traitement de l'air (1).

8. Procédé selon la revendication 7, **caractérisé par** le fait de monter au moins une deuxième unité complète d'échange de chaleur (9) à côté de la première unité d'échange de chaleur (8) par le fait de disposer la première unité d'échange de chaleur (8) et la deuxième unité d'échange de chaleur (9) l'une à côté de l'autre dans une structure qui comprend des plaques de séparation placées à une distance les unes des autres qui est suffisante pour l'aménagement des unités d'échange de chaleur (8, 9) entre elles ; et par le fait de configurer ladite au moins une deuxième unité d'échange de chaleur (9) de la même manière que la première unité d'échange de chaleur (8) en ce qui concerne le nombre des échangeurs de chaleur (2, 3) qui travaillent à contre-courant, ses dimensions en hauteur (a, b) et ses distributeurs d'air (6, 7).
